# FASCICULE DE BREVET EUROPEEN

(11) **EP 1 853 464 B1**
(45) Date de publication et mention de la délivrance du brevet: **28.04.2010**
(21) Numéro de dépôt: 06709112.4
(22) Date de dépôt: 18.01.2006
(51) Int. Cl.: B60R 13/08

(54) **PANNEAU ETANCHE THERMOFORME POUR VEHICULE**
THERMOGEFORMTE UNDURCHLÄSSIGE SCHEIBE FÜR FAHRZEUGE
THERMOFORMED IMPERMEABLE PANEL FOR VEHICLES

(30) Priorité: 21.01.2005 FR 0500622
(43) Date de publication de la demande: 14.11.2007
(73) Titulaire: Sofitec SA, 78530 Buc (FR)
(72) Inventeur: PROUX, Georges (décédé), (FR)
(74) Mandataire: de Roquemaurel, Bruno
(86) Numéro de dépôt international: PCT/FR2006/000105
(87) Numéro de publication internationale: WO 2006/077313

(56) Documents cités:
- EP-A- 0 557 580
- EP-A- 0 737 602
- FR-A- 2 839 022
- US-A- 4 932 315
- US-A- 5 322 722
- PATENT ABSTRACTS OF JAPAN vol. 013, no. 384 (C-629), 24 août 1989 (1989-08-24) & JP 01 132658 A (MITSUBISHI RAYON CO LTD), 25 mai 1989 (1989-05-25)

## Description

La présente invention concerne un panneau étanche thermoformé, notamment pour garnissage de l'habitacle ou du compartiment moteur d'un véhicule.

Elle s'applique notamment, mais non exclusivement, à l'étanchéité et à l'isolation acoustique de l'habitacle d'un véhicule.

Habituellement, on utilise un tel panneau réalisé dans un film de polymère ou une feuille mince de mousse de polymère, éventuellement thermoformé, pour assurer l'étanchéité des portières de véhicule. Il est fixé par exemple sur la tôle des portières au moyen d'un adhésif étalé ou déposé sous la forme d'un cordon en des endroits prédéterminés de l'une des faces du panneau. Un exemple de ce type de panneau est décrit dans le document FR 2839022. Pour les applications à l'automobile, on choisit généralement le polypropylène qui présente une relativement bonne tenue en température et une bonne résistance à la propagation de la flamme.

Malgré leur relativement bonne tenue en température, il s'avère que les polymères en général et en particulier le polypropylène a tendance à se rétracter d'une manière plus ou moins définitive à la suite de variations de température répétées et d'amplitude relativement importante (de plusieurs dizaines de degrés), comme c'est le cas dans l'habitacle d'une automobile en raison des variations climatiques. Il en résulte qu'à la longue, le panneau a tendance à se décoller ou se déchirer, selon la colle et l'épaisseur ou la densité du panneau choisies. Si le pouvoir adhésif de la colle est relativement important et l'épaisseur ou la densité du panneau relativement faible, l'élasticité du panneau a tendance à absorber la rétractation de celui-ci. Si le pouvoir adhésif de la colle ou l'élasticité du panneau sont plus faibles, ce dernier a tendance à se décoller.

Or, pour améliorer le confort des véhicules automobiles, les constructeurs cherchent à améliorer l'insonorisation de l'habitacle en disposant des panneaux d'étanchéité plus épais ou plus denses dans l'habitacle et notamment dans les portières, ainsi qu'autour du compartiment moteur.

Or, le polypropylène présente une tenue en température insuffisante pour pouvoir être utilisé dans le compartiment moteur, et les adhésifs couramment utilisés dans l'automobile sont inadaptés à la fixation de panneaux en polypropylène présentant une densité suffisante (>100 kg/m³) pour obtenir une bonne insonorisation.

La présente invention a pour but de supprimer ces inconvénients. Cet objectif est atteint par la prévision d'un panneau étanche thermoformé pour véhicule automobile, comprenant une feuille de mousse de polymère, dont l'une des faces est au moins partiellement recouverte d'un adhésif. Selon l'invention, la feuille de mousse est en polyéthylène téréphthalate cristallisé et présente une masse volumique supérieure à 100 kg/m³.

Selon un mode de réalisation de l'invention, l'adhésif est déposé sur la face du panneau en cordon.

Alternativement, l'adhésif est déposé sur la face du panneau en bande.

Alternativement, l'adhésif est déposé sur toute une face du panneau.

Selon un mode de réalisation de l'invention, la face du panneau non recouverte d'adhésif est enduite d'un revêtement anti-adhérent au moins en regard des parties recouvertes d'adhésif sur l'autre face.

Selon un mode de réalisation de l'invention, la face du panneau non recouverte d'adhésif présente une conformation prévue pour l'empêcher de se coller d'une manière définitive contre une face enduite de colle d'un autre panneau.

Selon un mode de réalisation de l'invention, la feuille de mousse en polyéthylène téréphthalate cristallisé contient un agent ignifugeant ou retardateur de flammes.

L'invention concerne également une garniture d'étanchéité et d'isolation acoustique pour habitacle de véhicule, comprenant un panneau tel que défini ci-avant.

L'invention concerne également une garniture d'isolation acoustique pour compartiment moteur de véhicule, comprenant un panneau comprenant un panneau tel que défini ci-avant.

L'invention concerne en outre une garniture d'absorption de vibrations pour véhicule, comprenant un panneau comprenant un panneau tel que défini ci-avant, au moins une face du panneau,étant conformée de manière à présenter des formes dont les dimensions sont adaptées aux vibrations à absorber.

Ces objets, caractéristiques et avantages ainsi que d'autres de la présente invention seront exposés plus en détail dans la description suivante faite à titre non limitatif.

Un panneau selon l'invention est réalisé à partir d'une feuille de mousse en polyéthylène téréphtalate cristallisé ou semi-cristallisé (C-PET) présentant une épaisseur de quelques millimètres, de préférence comprise entre 2 et 5 mm, et une masse volumique supérieure à 100 kg/m³.

Le PET cristallisé ou semi-cristallisé présente l'avantage d'avoir une température de fusion à 240 °C et donc une très bonne stabilité dimensionnelle (absence de rétractation permanente) lorsqu'il est soumis à des variations de températures dans une plage comprise entre -20 °C et +150 °C. Ce matériau présente également une très bonne résistance aux flammes par comparaison aux autres polymères tels que le PET amorphe ou même le polypropylène. Pour augmenter encore sa résistance à la propagation des flammes, on peut lui adjoindre des agents retardateurs de flammes ou ignifugeants.

Un panneau thermoformé selon l'invention peut par exemple être obtenu par le procédé suivant. Une feuille de mousse en PET amorphe est tout d'abord préchauffée dans un four à une température comprise entre 140 et 160°C de manière à obtenir une cristallisation du PET à au moins 20 %. La feuille de mousse préchauffée est ensuite thermoformée dans un moule préalablement porté à une température de 180°C à 190°C pour mettre en forme le panneau, puis placée dans un moule identique à température ambiante (environ 20°C) pour obtenir une solidification du panneau dans sa forme définitive.

Le temps de passage dans chaque moule est de l'ordre de quelques secondes, de préférence environ 6 secondes. Le temps de passage du panneau dans le four est de préférence de l'ordre de trois fois le temps de passage dans chacun des deux moules.

L'une des faces du panneau ainsi thermoformé est ensuite enduite totalement ou partiellement d'une couche d'un adhésif adapté, disposée par exemple en bande ou en cordon.

En vue de son stockage et de son transport (sous forme empilée), une feuille protectrice anti-adhérente, par exemple en papier siliconé, peut être appliquée contre la face adhésive.

Selon une première variante, la face du panneau non enduite de colle est enduite, au moins en regard des zones enduites d'adhésif sur l'autre face, d'un revêtement anti-adhérent, par exemple à base de silicones. De cette manière, les panneaux selon l'invention sont empilables, les zones adhésivées de chaque panneau venant en contact avec les zones anti-adhérentes d'un autre panneau, qui sert alors de protection.

Selon une seconde variante, la face du panneau non enduite de colle présente une conformation particulière permettant d'éviter que les panneaux selon l'invention, une fois empilés, n'adhèrent entre eux d'une manière définitive.

Le panneau selon l'invention est particulièrement adapté à son utilisation comme panneau d'étanchéité et d'isolation acoustique. Ainsi, il peut être utilisé comme garniture d'étanchéité de portières de véhicule, et plus généralement comme revêtement interne d'habillage d'un habitacle de véhicule. En raison de son épaisseur relativement importante, il contribue à améliorer l'isolation acoustique de l'habitacle.

En raison de son excellente tenue à des températures relativement élevées, jusqu'à environ 150 °C, le panneau selon l'invention peut être également employé comme isolant ou absorbant acoustique du compartiment moteur. Il peut ainsi être fixé sur la face intérieure du capot, sur la paroi de séparation entre le compartiment moteur et l'habitacle et sur la face intérieure d'une plaque de protection fixée sous le moteur, qui peut être réalisée en une pièce injectée ou thermoformée en polymère tel que le polypropylène ou le PET.

En vue d'être utilisé comme absorbant acoustique ou amortisseur de vibrations, le panneau selon l'invention est avantageusement thermoformé de manière à présenter sur l'une de ses faces des excroissances par exemple de forme cubique ou pyramidale dont les dimensions sont adaptées aux fréquences des vibrations à absorber.

## Revendications

1. Panneau étanche thermoformé pour véhicule automobile, comprenant une feuille de mousse de polymère, dont l'une des faces est au moins partiellement recouverte d'un adhésif,
**caractérisé en ce que** la feuille de mousse est en polyéthylène téréphthalate cristallisé et présente une masse volumique supérieure à 100 kg/m³.

2. Panneau selon la revendication 1,
dans lequel l'adhésif est déposé sur la face du panneau en cordon.

3. Panneau selon la revendication 1,
dans lequel l'adhésif est déposé sur la face du panneau en bande.

4. Panneau selon la revendication 1,
dans lequel l'adhésif est déposé sur toute une face du panneau.

5. Panneau selon l'une des revendications 1 à 4,
dans lequel la face du panneau non recouverte d'adhésif est enduite d'un revêtement anti-adhérent au moins en regard des parties recouvertes d'adhésif sur l'autre face.

6. Panneau selon l'une des revendications 1 à 4,
dans lequel la face du panneau non recouverte d'adhésif présente une conformation prévue pour l'empêcher de se coller d'une manière définitive contre une face enduite de colle d'un autre panneau.

7. Panneau selon l'une des revendications 1 à 6,
dans lequel la feuille de mousse en polyéthylène téréphthalate cristallisé contient un agent ignifugeant ou retardateur de flammes.

8. Garniture d'étanchéité et d'isolation acoustique pour habitacle de véhicule,
**caractérisée en ce qu'**elle comprend un panneau selon l'une des revendications 1 à 7.

9. Garniture selon la revendication 8,
dans laquelle au moins une face du panneau est conformée de manière à présenter des formes dont les dimensions sont adaptées aux vibrations à absorber.

10. Garniture d'isolation acoustique et/ou d'absorption des vibrations, pour compartiment moteur de véhicule,
**caractérisée en ce qu'**elle comprend un panneau selon l'une des revendications 1 à 7.

11. Garniture selon la revendication 10,
dans laquelle au moins une face du panneau est conformée de manière à présenter des formes dont les dimensions sont adaptées aux vibrations à absorber.

## Claims

1. Thermoformed impermeable panel for vehicle, comprising a polymer foam sheet, one of the faces of which is at least partially covered by an adhesive,
**characterised in that** the foam sheet is in crystallized polyethylene terephthalate and has a density higher than 100 kg/m³.

2. Panel according to claim 1,
wherein the adhesive is deposited onto the face in cord of the panel.

3. Panel according to claim 1,
wherein the adhesive is deposited onto the face in strip of the panel.

4. Panel according to claim 1,
wherein the adhesive is deposited onto any face of the panel.

5. Panel according to one of claims 1 to 4,
wherein the face of the panel which is not covered by adhesive is coated with an anti-adherent coating at least on the opposite parts covered with adhesive on the other face.

6. Panel according to one of claims 1 to 4,
wherein the face of the panel not covered with adhesive is conformed to avoid it from definitively sticking to a face coated with glue of another panel.

7. Panel according to one of claims 1 to 6,
wherein the foam sheet of crystallized polyethylene terephthalate comprises a fire or flam retardant.

8. Trim for the sealing and acoustic insulation of a passenger cell in a vehicle,
**characterised in that** it comprises a panel according to one of claims 1 to 7.

9. Trim according to claim 8,
wherein at least one face of the panel is conformed so as to have shapes which dimensions are adapted to the vibrations to be absorbed.

10. Trim for the acoustic insulation and/ or the vibration absorption, for an engine compartment in a vehicle,
**characterised in that** it comprises a panel according to one of claims 1 to 7.

11. Trim according to claim 10,
wherein at least one face of the panel is conformed so as to have shapes which dimensions are adapted to the vibrations to be absorbed.

## Patentansprüche

1. Undurchlässige thermogeformte Platte für Kraftfahrzeuge, umfassend eine Polymerschaumstofffolie, deren eine Seite wenigstens teilweise mit einem Klebstoff bedeckt ist,
**dadurch gekennzeichnet, dass** die Schaumstofffolie aus kristallisiertem Polyethylenterephthalat besteht und eine Dichte von mehr als 100 kg/m³ aufweist.

2. Platte nach Anspruch 1,
bei der der Klebstoff in Form einer Klebstoffraupe auf die Plattenseite aufgebracht wird.

3. Platte nach Anspruch 1,
bei der der Klebstoff in Form eines Klebstoffbandes auf die Plattenseite aufgebracht wird.

4. Platte nach Anspruch 1,
bei der der Klebstoff auf eine ganze Seite der Platte aufgebracht wird.

5. Platte nach einem der Ansprüche 1 bis 4,
bei der die nicht mit Klebstoff bedeckte Plattenseite wenigstens gegenüber den klebstoffbedeckten Teilen der anderen Seite mit einer nichthaftenden Beschichtung versehen ist.

6. Platte nach einem der Ansprüche 1 bis 4,
bei der die nicht mit Klebstoff bedeckte Plattenseite eine Formgebung aufweist, die dazu vorgesehen ist, ein definitives Zusammenkleben der Plattenseite mit einer klebstoffbedeckten Seite einer anderen Platte zu verhindern.

7. Platte nach einem der Ansprüche 1 bis 6,
bei der die Schaumstofffolie aus kristallisiertem Polyethylenterephthalat ein flammfest machendes oder flammenverzögerndes Mittel enthält.

8. Dichtungs- und Schalldämmungsmaterial für Fahrgastzellen von Kraftfahrzeugen,
**dadurch gekennzeichnet, dass** das Material eine Platte nach einem der Ansprüche 1 bis 7 umfasst.

9. Material nach Anspruch 8,
bei dem wenigstens eine Seite der Platte so gestaltet ist, dass sie Formen mit zur Dämpfung von Vibrationen geeigneten Abmessungen aufweist.

10. Schalldämmungs- und/oder Vibrationsdämpfungsmaterial für Motorräume von Kraftfahrzeugen, **dadurch gekennzeichnet, dass** das Material eine Platte nach einem der Ansprüche 1 bis 7 umfasst.

11. Material nach Anspruch 10,
bei dem wenigstens eine Seite der Platte so gestaltet ist, dass sie Formen mit zur Dämpfung von Vibrationen geeigneten Abmessungen aufweist.
